# EUROPÄISCHE PATENTSCHRIFT

(11) **EP 1 407 652 B1**
(45) Veröffentlichungstag und Bekanntmachung des Hinweises auf die Patenterteilung: **06.09.2006**
(21) Anmeldenummer: 03015144.3
(22) Anmeldetag: 04.07.2003
(51) Int. Cl.: A01C 5/06

(54) **Säschar**
Coulter for seeding machine
Soc pour semoir

(30) Priorität: 11.10.2002 DE 10247569
(43) Veröffentlichungstag der Anmeldung: 14.04.2004
(73) Patentinhaber: Kverneland ASA, 4355 Kvernaland (NO)
(72) Erfinder: Stüttgen, Gerhard, 59510 Lippetal-Nordwald (DE); Meinel, Till, Dr., 59494 Soest (DE)
(74) Vertreter: Becker, Thomas

(56) Entgegenhaltungen:
- EP-A- 0 579 909
- EP-A- 0 772 963
- CA-A- 2 326 204
- DE-A- 10 116 136
- DE-A- 19 707 001
- DE-U- 29 801 820
- GB-A- 1 262 903
- US-A- 2 924 189
- US-A- 6 082 276

## Beschreibung

Die Erfindung betrifft ein Säschar.

Säschare sind in verschiedenen Ausführungsformen bekannt.

Ein sogenanntes 2-Scheiben-Säschar beschreibt die US 4,598,654 A. Es besteht aus zwei gleich großen und baugleichen Stahlscheiben, die - in einer Aufsicht ihrer Funktionsposition - V-förmig angeordnet sind. Mit ihren in Zugrichtung vorderen Enden stoßen die beiden Stahlscheiben unter Vorspannung aneinander. Den größten Abstand weisen sie an dem in Zugrichtung hinteren Ende auf. Beim Säen wird mit der vorderen "V-Kante" der Boden aufgeschnitten. Die sich V-förmig erweiternden Scheiben öffnen danach die Furche, in die das Saatgut abgelegt wird. Danach schließt sich die Furche wieder. Nachteilig bei diesem Säschar ist, dass Fremdkörper wie Steine, die zwischen die sich drehenden Scheiben geraten, die Stahlscheiben dauerhaft verformen und/oder zum Stillstand der Scheiben führen. Das Schar ist dann funktionsuntüchtig.

Das Schar gemäß EP 579 909 B2 führt insoweit zu einer wesentlichen Verbesserung. Neben einer topfartigen Hauptscheibe aus Stahl ist eine zweite topfartige Scheibe aus einem flexiblen Werkstoff angeordnet. Beide Scheiben sind zueinander so schräggestellt, dass sich ihr Abstand in Fahrtrichtung nach hinten und oben vergrößert. Sofern nun ein Fremdkörper zwischen beide Scheiben gelangt ist die zweite Scheibe aufgrund ihres flexiblen (nachgiebigen) Materials in der Lage, sich entsprechend zu verformen. Der Fremdkörper wird allenfalls zwischen den Scheiben festgehalten, bis er, nach weiterer Drehung der Scheiben, wieder herausfällt, sobald der Abstand zwischen den Scheiben groß genug ist.

Ein ähnliches Schar zeigt die US 6,082,276 A.

Das Schar gemäß EP 0 579 909 B2 hat sich grundsätzlich bewährt und wird in großem Umfang eingesetzt. Es gibt jedoch Sonderanwendungen, wo zusätzliche Anforderungen an das Schar gestellt werden.

Während früher Erntereste, wie Stroh oder auch Pflanzen, vor einer neuen Saat in der Regel untergepflügt wurden ist es heute vielfach üblich, diese Pflanzenreste auf dem Boden liegen zu lassen, wo sie eine Mulchschicht bilden. Die neue Saat muss entsprechend durch diese Mulchschicht hindurch erfolgen.

Dies bedeutet bei gewünschter konstanter Saatguttiefe, dass das Schar insgesamt und/oder der Schardruck größer sein muss, weil auch die Mulchschicht durchstoßen werden muss.

Versuche haben gezeigt, dass die Vergrößerung der Scharscheiben nicht ausreicht, das Problem zu lösen. Der Widerstand, den der Boden den eindringenden Scheiben entgegensetzt, vergrößert sich bei größeren Scheiben erheblich.

Ein weiterer Nachteil ist, dass bei Einsatz größerer Scheiben und größerer Gesamt-Furchentiefe auch die Breite der gebildeten Furche steigt, was unerwünscht ist.

Ein Schar mit einer planen ersten Scheibe und einer konkaven gegenüberliegenden Seite zeigt die CA 2,326,204 A, wobei hier die beiden Scheiben parallel verlaufen.

Hier setzt die Erfindung an. Es soll ein Schar bereitgestellt werden, welches auch den besonderen Anforderungen an ein sogenanntes Mulchschar gerecht wird und die skizzierten Nachteile nicht aufweist.

Der Erfindung liegen folgende Erkenntnisse zugrunde:
- die topfartige (gewölbte) Form der Scharscheiben verursacht mit größer werdenden Scheibendurchmessern einen überproportionalen Anstieg des vom Acker (Boden) entgegengesetzten Widerstands
- Der Anstellwinkel (zur Vertikalen) insbesondere der Hauptscheibe, also der Scheibe, die für das Öffnen einer Furche verantwortlich ist, sollte so gering wie möglich sein, um auch insoweit den mechanischen Widerstand auf die Zugmaschine zu reduzieren
- Die zweite Scheibe spielt im Zusammenhang mit den genannten Problemen nur eine untergeordnete Rolle, weshalb sie weitestgehend unverändert (gegenüber der EP 0 579 909 B2) bleiben kann.

Danach betrifft die Erfindung in ihrer allgemeinsten Ausführungsform ein Säschar mit folgenden Merkmalen:
- einem metallischen, planen (ebenen), kreisförmigen, drehbar geführten Schneidblatt,
- einer dem Schneidblatt gegenüberliegenden in Bezug auf das Schneidblatt konkav gekrümmten Scheibe, die zumindest an ihrem äußeren Randabschnitt aus einem elastisch (reversibel) verformbaren Werkstoff besteht,
- Schneidblatt und Scheibe sind an einer Scharhalterung derart befestigt, dass
- sich ihr Abstand, in Funktionsposition des Säschars, entgegen dessen Zugrichtung und nach oben vergrößert,
- das Schneidblatt unter einem Winkel ≥0 und <30° zu einer Vertikalebene verläuft,
- die Scheibe mit ihrem in Zugrichtung vorderen Abschnitt in einer Ansicht entgegen der Zugrichtung zumindest teilweise vom Schneidblatt verdeckt angeordnet ist.

Im Gegensatz zum Schar gemäß EP 0 579 909 B2 wird die topfartige Hauptscheibe erfindungsgemäß durch eine plane Metallscheibe ersetzt. Der Verzicht auf die Krümmung (Topfform) führt zu einer drastischen Reduzierung des Widerstands beim Aufschneiden eines Bodens und beim anschließenden Eindringen in den Boden. Dies ist insbesondere wichtig, wenn Furchen größerer Tiefe und/oder schwere Böden aufgeschnitten werden müssen. Die flache Bauform erhöht die Lebensdauer des Schneidblatts gegenüber der bekannten Topfscheibe erheblich. Das Schneidblatt hat im wesentlichen nur noch die Aufgabe, den Boden aufzuschneiden und eine schmale Furche zu öffnen (aufgrund seiner geringen Schrägstellung). Eine relativ geringe Schrägstellung zur Vertikalen führt auch zu einer weiteren Reduzierung der Widerstandskräfte. Nach verschiedenen Ausführungsformen soll der "Anstellwinkel" kleiner 30, kleiner 10 bis hin zu kleiner 5 Grad liegen. Er beträgt nach einer Ausführungsform nur 3 Grad.
- Der "Anstellwinkel" der flexiblen (reversibel verformbaren) Scheibe ist weniger kritisch, da die Scheibe aufgrund ihrer elastischen Eigenschaften ohnehin kaum mechanischen Widerstand im Boden verursacht. Er ist deshalb nach einer Ausführungsform größer als der Anstellwinkel der Stahlscheibe, beispielsweise 10-15 Grad, und zwar "spiegelbildlich"zum Anstellwinkel des Schneidblatts. Diese Scheibe kann, in Bezug auf das Schneidblatt, konkav gekrümmt sein (= Topfform oder Tellerform). Es ist möglich, dass die Scheibe allseitig mit Abstand zum Rand des Schneidblatts verläuft.

Verschiedene Ausgestaltungen sind möglich. Hierzu gehören beispielsweise:
- Scheibe und Schneidblatt sind so angeordnet, dass sie sich im unbelasteten Zustand an ihrem in Funktionsposition unteren Ende berühren, auch flächenhaft. Hierdurch wird das Eindringen von Bodenmaterial in die von der Scheibe offen gehaltene Furche vermieden.
- Der Durchmesser der Scheibe beträgt das 0,5-0,9 fache des Durchmessers des Schneidblatts.
- Der Durchmesser der Scheibe beträgt das 0,6 bis 0,8 fache des Durchmessers des Schneidblatts.
- Zumindest der reversibel verformbare Abschnitt der Scheibe besteht aus einem elastomeren Werkstoff.
- Natürlich kann auch die ganze Scheibe aus einem (einheitlichen) Werkstoff bestehen.
- Zumindest der reversibel verformbare Abschnitt der Scheibe besteht aus einem Werkstoff der Gruppe: Kautschuk, Gummi, Kunststoff.
- Die Scheibe weist mittig einen nicht gekrümmten Abschnitt auf, das heißt, nur der Umfangsrand ist in Richtung auf das Schneidblatt gekrümmt. Auf diese Weise kann der mechanische Widerstand noch weiter reduziert werden, da die Scheibe weniger weit gegenüber dem Schneidwerkzeug (Schneidblatt) "vorsteht".
- Das Schneidblatt weist umfangsseitig eine Verzahnung auf. Hierdurch kann die Schneidleistung weiter erhöht werden.
- Das Schneidblatt besteht aus Stahl. Stahl ist besonders abriebfest.
- Die Scheibe ist - wie das Schneidblatt - drehbar. Der Verschleiß wird auf ein Minimum reduziert.
- Die Scheibe sitzt auf einer Drehwelle, die im Abstand zur Drehwelle des Schneidblatts verläuft. Die flexible Scheibe kann so deutlich kleiner als das Schneidblatt sein und nach unten versetzt zur Drehachse des Schneidblatts angeordnet werden. Sie wirkt nur dort, wo sie benötigt wird, nämlich zum kurzfristigen Öffnen beziehungsweise Offenhalten der Furche während des Einlegens des Saatguts.

Weitere Merkmale der Erfindung ergeben sich aus den Merkmalen der Unteransprüche und den sonstigen Anmeldungsunterlagen. Die Erfindung wird nachstehend anhand eines Ausführungsbeispiels näher beschrieben. Dabei zeigen - jeweils in stark schematisierter Darstellung -
Fig. 1: eine perspektivische Ansicht (von schräg oben) auf ein Säschar,
Fig. 2: eine Ansicht des Säschars von vorne,
Fig. 3: eine Ansicht des Säschars von der Seite,
Fig. 4: eine Ansicht auf die Kombination von Schneidblatt und elastischer Scheibe von oben.

In den Figuren sind gleiche oder gleich wirkende Bauteile mit gleichen Bezugsziffern dargestellt.

Das in den Figuren dargestellte Säschar besteht aus einer Scharhalterung 10, einem auf einer Welle 12 sitzenden Schneidblatt 14, einer auf einer Welle 16 sitzenden Scheibe 18 sowie Rohren 20 zur Zuführung von Saatgut oder sonstigem körnigem Material, wobei die Wellen 12, 16 und damit das Schneidblatt 14 sowie die Scheibe 18 an einer Traverse 22 der Scharhalterung 10 befestigt sind.

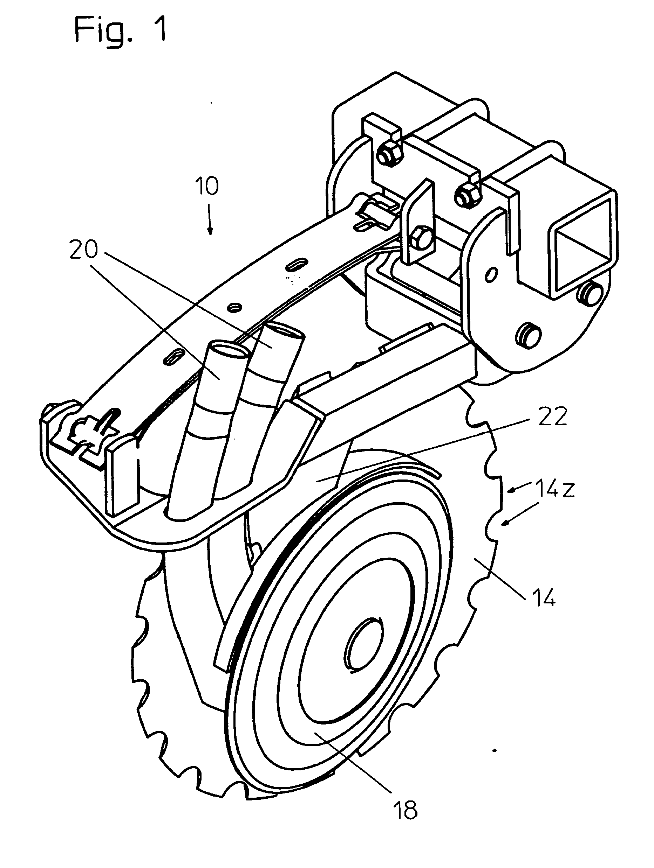

Das Schneidblatt 14 besteht aus Stahl. Es besitzt eine Kreisform. Umfangsseitig weist das Schneidblatt 14 eine Verzahnung 14z auf (nur in Fig. 1 dargestellt). Das Schneidblatt 14 ist als flache (plane, ebene) Scheibe gestaltet.

Die Scheibe 18 ist demgegenüber aus einem elastischen (flexiblen), reversibel verformbaren Kunststoff gebildet und besitzt angenähert eine Topfform (konvexe Krümmung in Bezug auf das Schneidblatt 14).

Die Figuren zeigen, dass Schneidblatt 14 und Scheibe 18 in mehrfacher Hinsicht unter einem Winkel zueinander angeordnet sind, und zwar wie folgt:

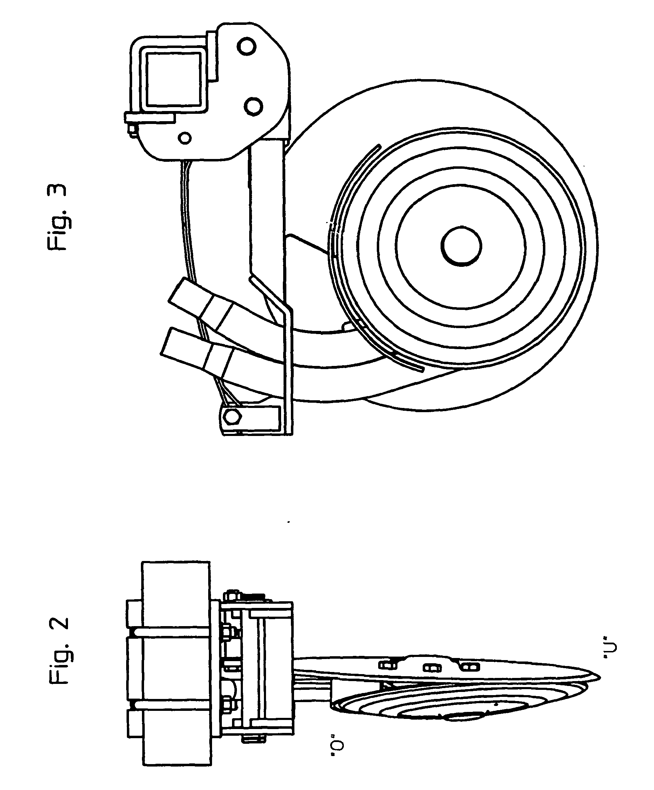

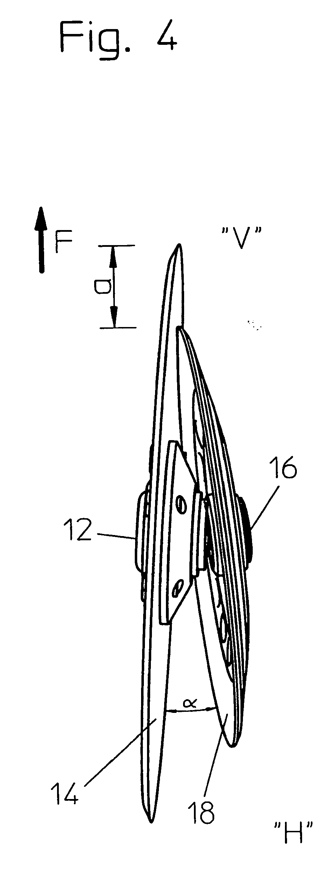

In Figur 4 ist die Fahrtrichtung (Zugrichtung) des Schars mit F angegeben. Zwischen einem in Fahrtrichtung vorderen Ende ("V") und einem hinteren Ende ("H") vergrößert sich der Abstand zwischen Schneidblatt 14 und Scheibe 18 ebenso wie zwischen einem in Figur 2 erkennbaren unteren Abschnitt ("U") und einem oberen Abschnitt ("O").

Während das Schneidblatt 14 nur minimal zur Vertikalen geneigt ist (hier: 4°), ist der (umgekehrte) Neigungswinkel (Anstellwinkel) der Scheibe 18 gegenüber der Vertikalen etwas größer (hier: 8°).

Der zwischen dem Schneidblatt 14 und der Scheibe 18 in Fahrtrichtung F ausgebildete Winkel (Figur 4: a) liegt bei ca. 15°.

Die Anordnung ist so, dass die topfartige elastische Scheibe 18 am vorderen Ende ("V") - entgegen der Fahrtrichtung betrachtet - geringfügig hinter dem Schneidblatt liegt, wie Figur 2 zeigt, also quasi "im Windschatten". Dabei kann die Scheibe 18 mit ihrem Rand die korrespondierende Hauptfläche des Schneidblattes 14 im unbelasteten Zustand berühren. Sie kann auch unter geringer Vorspannung gegenüber dem Schneidblatt 14 anliegen. Ebenso ist auch ein geringer Abstand möglich.

Wie die Figuren (insbesondere 1, 4) zeigen, ist der Durchmesser des Schneidblattes 14 ca. 30 % größer gegenüber dem Durchmesser der Scheibe 18. Die Scheibe 18 ist so angeordnet, dass sie umfangsseitig überall vom Schneidblatt 14 in einer Seitenansicht überragt wird (Figur 3), und zwar unsymmetrisch. Figur 3 zeigt, dass unten (bei "U") der Abstand zwischen dem Rand der Scheibe 18 und dem Rand des Schneidblattes 14 geringer ist als am oberen Ende (bei "O").

Aufgrund der beschriebenen Anordnung des ebenen Schneidblatts 14 und der topfartigen Scheibe 18 lassen sich folgende Vorteile erreichen:

Das Schar kann als sogenanntes Mulchschar benutzt werden, also auch bei Böden, die durch eine Mulchschicht abgedeckt sind. Die mehr oder weniger flache (ebene) Ausführungsform des Schneidblattes führt zu einer Reduzierung der Aufgabe des Schneidblattes dahingehend, den Boden aufzuschneiden, aufgrund der Schrägstellung eine schmale Furche zu öffnen und nur für einen geringen Moment freizuhalten, bis nämlich unmittelbar anschließend über die Zuführrohre 20 Saatgut in den Raum zwischen Scheidblatt 14 und Scheibe 18 zugeführt wurde. Für diesen kurzen Zeitraum übernimmt die elastische Scheibe 18 die Aufgabe, die gebildete Bodenfurche offenzuhalten, ein Eindringen von Bodenteilen so weit wie möglich zu verhindern und dem Saatkorn ausreichend Platz zu verschaffen, auf den Boden der Furche zu gelangen. Sie wird dabei kaum mechanisch beansprucht. Die Kombination des flachen Schneidblatts aus Stahl mit der elastischen Scheibe 18 (beispielsweise aus einem gummielastischen Werkstoff) stellt eine dauerhafte Funktionstüchtigkeit des Schars sicher. Sollten Steine zwischen Schneidblatt 14 und Scheibe 18 eindringen, werden diese gegebenenfalls zwischen Schneidblatt 14 und Scheibe 18 eingeklemmt, jedoch unmittelbar wieder freigegeben, sobald nach weiterer Drehung von Schneidblatt 14 und/oder topfförmiger Scheibe 18 um die Wellen 12, 16 der Abstand zwischen Scheibe 18 und Schneidblatt 14 wieder groß genug ist beziehungsweise die Klemmkraft nachgelassen hat. Unmittelbar nachdem ein Fremdkörper wieder freigegeben wurde, liegt die elastische Scheibe 18 mit ihrem Rand wieder an der korrespondierenden Fläche des Schneidblattes 14 an und "sichert" das Offenhalten der Furche bis zum Einlegen des Saatgutes.

In diesem Zusammenhang ist die "verdeckte" Anordnung der Scheibe 18 am vorderen Ende ("V") der Scharanordnung (in Fahrtrichtung F betrachtet) von Bedeutung, um sicherzustellen, dass nicht schon beim Aufschneiden der Furche die Scheibe 18 belastet wird. Aus der "verdeckten Anordnung" ergibt sich zwangsläufig ein Abstand ("a") zwischen dem vorderen Ende des Schneidblattes 14 und dem vorderen Ende der topfartigen Scheibe 18, der auch deutlich geringer sein kann als in Figur 4 zu erkennen.

## Patentansprüche

1. Säschar für Böden mit einer Mulchschicht mit folgenden Merkmalen:
a. einem metallischen, planen, kreisförmigen, drehbar geführten Schneidblatt (14),
b. einer dem Schneidblatt (14) gegenüberliegenden in Bezug auf das Schneidblatt (14) konkav gekrümmten Scheibe (18),
c. Schneidblatt (14) und Scheibe (18) sind an einer Scharhalterung (10) derart befestigt, dass
c1) das Schneidblatt (14) unter einem Winkel <30° zu einer Vertikalebene verläuft, **dadurch gekennzeichnet, dass**
c2) sich ihr Abstand, in Funktionsposition des Säschars, entgegen dessen Zugrichtung und nach oben vergrößert,
c3) die Scheibe (18) zumindest an ihrem äußeren Randabschnitt aus einem reversibel verformbaren Werkstoff besteht und mit ihrem in Zugrichtung vorderen Abschnitt bei (V) in einer Ansicht entgegen der Zugrichtung zumindest teilweise vom Schneidblatt (14) verdeckt angeordnet ist.

2. Säschar nach Anspruch 1, bei dem sich Scheibe (18) und Schneidblatt (14) im unbelasteten Zustand an ihrem in Funktionsposition unteren Ende berühren.

3. Säschar nach Anspruch 1, bei dem der Durchmesser der Scheibe (18) 50-95% so groß wie der Durchmesser des Schneidblatts (14) ist.

4. Säschar nach Anspruch 1, bei dem der Durchmesser der Scheibe (18) 60-80% so groß wie der Durchmesser des Schneidblatts (14) ist.

5. Säschar nach Anspruch 1, bei dem zumindest der reversibel verformbare Abschnitt der Scheibe (18) aus einem elastomeren Werkstoff besteht.

6. Säschar nach Anspruch 1, bei dem zumindest der reversibel verformbare Abschnitt der Scheibe aus einem Werkstoff der Gruppe: Kautschuk, Gummi, Kunststoff besteht.

7. Säschar nach Anspruch 1, dessen Scheibe (18) mittig einen nicht gekrümmten Abschnitt aufweist.

8. Säschar nach Anspruch 1, dessen Schneidblatt (14) umfangsseitig eine Verzahnung (14z) aufweist.

9. Säschar nach Anspruch 1, dessen Schneidblatt (14) aus Stahl besteht.

10. Säschar nach Anspruch 1, mit drehbarer Scheibe (18).

11. Säschar nach Anspruch 1, dessen Scheibe (18) auf einer Drehwelle (16) sitzt, die im Abstand zur Drehwelle (12) des Schneidblatts (14) verläuft.

12. Säschar nach Anspruch 1, dessen Scheidblatt (14) unter einem Winkel <10° zu einer Vertikalebene verläuft.

13. Säschar nach Anspruch 1, dessen Scheidblatt (14) unter einem Winkel <5° zu einer Vertikalebene verläuft.

14. Säschar nach Anspruch 1, bei dem das Scheidblatt (14) unter einem kleineren Winkel zu einer Vertikalebene verläuft als die Scheibe (18).

15. Säschar nach Anspruch 1, bei dem die Scheibe (18) allseitig mit Abstand zum Rand des Schneidblatts (14) verläuft.

## Claims

1. Seed ploughshare for soils with a mulch layer, having the following features:
a. a metallic, plane, circular, rotatably guided cutting blade (14),
b. a disc (18) lying opposite the cutting blade (14) and curved in a concave manner in relation to the cutting blade (14),
c. the cutting blade (14) and the disc (18) are fastened to a ploughshare mount (10) such that
c1) the cutting blade (14) extends at an angle of <30° relative to a vertical plane, **characterised in that** c2) their spacing, when the seed ploughshare is in the functional position, increases opposite to the direction of pull thereof and upwards,
c3) the disc (18) consists, at least at its outer edge portion, of a reversibly deformable material and is disposed with its front portion which leads in the direction of pull at (V) in a view opposite to the direction of pull at least partly concealed by the cutting blade (14).

2. Seed ploughshare according to Claim 1, in which the disc (18) and the cutting blade (14) contact one another in the unloaded state at their end which is at the bottom in the functional position.

3. Seed ploughshare according to Claim 1, in which the diameter of the disc (18) is 50-95% as great as the diameter of the cutting blade (14).

4. Seed ploughshare according to Claim 1, in which the diameter of the disc (18) is 60-80% as great as the diameter of the cutting blade (14).

5. Seed ploughshare according to Claim 1, in which at least the reversibly deformable portion of the disc (18) consists of an elastomeric material.

6. Seed ploughshare according to Claim 1, in which at least the reversibly deformable portion of the disc consists of a material of the group: caoutchouc, rubber, plastics.

7. Seed ploughshare according to Claim 1, the disc (18) of which comprises a non-curved portion in the centre.

8. Seed ploughshare according to Claim 1, the cutting blade (14) of which comprises a tooth system (14z) at the circumference.

9. Seed ploughshare according to Claim 1, the cutting blade (14) of which consists of steel.

10. Seed ploughshare according to Claim 1, with a rotatable disc (18).

11. Seed ploughshare according to Claim 1, the disc (18) of which is seated on a rotary shaft (16) which extends at a spacing from the rotary shaft (12) of the cutting blade (14).

12. Seed ploughshare according to Claim 1, the cutting blade (14) of which extends at an angle of <10° relative to a vertical plane.

13. Seed ploughshare according to Claim 1, the cutting blade (14) of which extends at an angle of <5° relative to a vertical plane.

14. Seed ploughshare according to Claim 1, in which the cutting blade (14) extends at a smaller angle relative to a vertical plane than the disc (18).

15. Seed ploughshare according to Claim 1, in which the disc (18) extends at a spacing from the edge of the cutting blade (14) on all sides.

## Revendications

1. Ensemble pour semer pour sols comprenant une couche de couverture présentant les caractéristiques suivantes :
a. une lame de coupe (14) métallique, plane, de forme circulaire, guidée de façon rotative,
b. un disque (18) opposé à la lame de coupe (14) et incurvé de façon concave par rapport à cette lame de coupe (14),
c. la lame de coupe (14) et le disque (18) sont fixés sur un support d'ensemble (10) de telle sorte que
c1) la lame de coupe (14) est agencée en formant un angle <30° par rapport à un plan vertical, **caractérisé en ce que**
c2) sa distance augmente, dans la position de fonction de l'ensemble à semer, dans le sens contraire à son sens de traction et vers le haut,
c3) le disque (18) est à base de matériau déformable de façon réversible au moins sur sa zone périphérique extérieure et est disposé avec sa partie avant dans le sens de traction masqué au moins en partie par la lame de coupe (14) en (V) dans une vue contraire au sens de traction.

2. Ensemble pour semer selon la revendication 1, sur lequel le disque (18) et la lame de coupe (14) se touchent dans l'état non chargé sur son extrémité inférieure dans la position de fonction.

3. Ensemble pour semer selon la revendication 1, sur lequel le diamètre du disque (18) a une grandeur correspondant à 50 à 95 % du diamètre de la lame de coupe (14).

4. Ensemble pour semer selon la revendication 1, sur lequel le diamètre du disque (18) représente 60 à 80 % du diamètre de la lame de coupe (14).

5. Ensemble pour semer selon la revendication 1, sur lequel au moins la partie déformable de façon réversible du disque (18) est à base d'un matériau élastomère.

6. Ensemble pour semer selon la revendication 1, sur lequel au moins la partie déformable de façon réversible du disque est à base d'un matériau du groupe suivant : caoutchouc, gomme, plastique.

7. Ensemble pour semer selon la revendication 1, dont le disque (18) présente au centre une partie non incurvée.

8. Ensemble pour semer selon la revendication 1, dont la lame de coupe (14) présente une denture (14z) en périphérie.

9. Ensemble pour semer selon la revendication 1, dont la lame de coupe (14) est en acier.

10. Ensemble pour semer selon la revendication 1, avec disque (18) rotatif.

11. Ensemble pour semer selon la revendication 1, dont le disque (18) est disposé sur un arbre de rotation (16) qui est agencé à distance de l'arbre de rotation (12) de la lame de coupe (14).

12. Ensemble pour semer selon la revendication 1, dont la lame de coupe (14) est agencée en formant un angle <10° par rapport à un plan vertical.

13. Ensemble pour semer selon la revendication 1, dont la lame de coupe (14) est agencée en formant un angle <5° par rapport à un plan vertical.

14. Ensemble pour semer selon la revendication 1, sur lequel la lame de coupe (14) est agencée en formant un angle par rapport à un plan vertical plus petit que le disque (18).

15. Ensemble pour semer selon la revendication 1, sur lequel le disque (18) est disposé des deux côtés à distance du bord de la lame de coupe (14).
